# EUROPEAN PATENT SPECIFICATION

(11) **EP 2 254 382 B1**
(45) Date of publication and mention of the grant of the patent: **08.02.2017**
(21) Application number: 10004072.4
(22) Date of filing: 16.04.2010
(51) Int. Cl.: H04W 88/10, H04W 88/06

(54) **Method and system for integrated femtocell and WLAN access point**
Verfahren und System für integrierten Femtozell- und WLAN-Zugriffspunkt
Procédé et système pour point d'accès femtocell et WLAN intégré

(30) Priority: 22.05.2009 US 470983
(43) Date of publication of application: 24.11.2010
(73) Proprietor: Broadcom Corporation, Irvine, CA 92617 (US)
(72) Inventor: Karaoguz, Jeyhan, 90602, Irvine, CA (US); Ilyadis, Nicholas, 03054 Merrimack, NH (US); Seshadri, Nambirajan, 92603 Irvine, CA (US)
(74) Representative: Jehle, Volker Armin

(56) References cited:
- WO-A1-2009/020549
- US-A1- 2009 047 016
- US-A1- 2009 082 010
- US-B1- 7 289 478

## Description

### FIELD OF THE INVENTION

Certain embodiments of the invention relate to networking. More specifically, certain embodiments of the invention relate to a method and system for integrated femtocell and WLAN access point.

### BACKGROUND OF THE INVENTION

An access point is a device that may be placed in a customer's residence or in a business environment, for example, and may provide WLAN or Wi-Fi service. An access point may be enabled to connect an endpoint device such as a computer or handheld wireless device to an intranet or an internet service provider (ISP) via a physical broadband connection which may be, for example, a digital subscriber line (DSL) connection and/or a cable connection. Access points may communicate in compliance with one or more 802.11 standards.

Similar to access points, femtocells may be placed in a customer's residence or in a small business environment as well. Femtocells may be utilized for off-loading macro radio network traffic, improving coverage locally in a cost-effective manner, and/or implementing home-zone services to increase revenue. Femtocells, like macro cell base stations, may be enabled to connect "standard" phones to a cellular provider's network by a physical broadband connection which may be a digital subscriber line (DSL) connection and/or a cable connection, for example. Since the traffic between a customer's premises femtocell equipment and the operator's network may be traversing a public network, the traffic may be prone to various risks.

Communication between femtocells and one or more cellular provider's networks enables operation in private and public areas. The capacity of a femtocell may be adequate to address a typical family use model supporting two to four simultaneous voice calls and/or data traffic, for example.

In some ways, the functionality and/or services provided by an access point may overlap with functionality and/or services provided by a femtocell. On the other hand access points and femtocells each have their advantages and disadvantages. Accordingly, coordination of coexistent access points and femtocells a LAN or enterprise network may present a number of challenges to network administrators.

Further limitations and disadvantages of conventional and traditional approaches will become apparent to one of skill in the art, through comparison of such systems with some aspects of the present invention as set forth in the remainder of the present application with reference to the drawings.

US 2009/082010 A1 describes a communication device that includes a femtocell base station and a mobile station transmitter/receiver. The femtocell base station may provide bidirectional internet protocol (IP) communication for one or more mobile devices to a cellular network. The femtocell base station may be operable to communicate with the cellular network using a wide area network. The mobile station transmitter/receiver may be coupled to the femtocell base station. The mobile station transmitter/receiver may be operable to perform radio frequency (RF) wireless communication with the cellular network to detect and/or report environmental parameters, performing testing such as loopback testing, and/or provide communication for the one or more mobile devices.

Document US 2009/047016 A1 discloses a device (so-called "MANT: Multi-Access Network Terminal") comprising an integrated WLAN and an integrated femtocell cellular interface, wherein a destination of received data is determined and said received data is transmitted to one or more end-user devices via said integrated WLAN interface and/or said integrated femtocell cellular interface based on said determined destination.

A system and/or method is provided for integrated femtocell and WLAN access point, substantially as shown in and/or described in connection with at least one of the figures, as set forth more completely in the claims.

According to the invention, there are provided a method for communication as defined by independent claim 1 and a system for networking as defined by independent claim 11.

Further advantageous features of the invention are defined by the dependent claims.

Advantageously, the method further comprises receiving by said device, said data via an IP connection.

Advantageously, the method further comprises re-packetizing said data into packets formatted in compliance with WLAN protocols and/or cellular protocols utilized by said WLAN interface.

Advantageously, the method further comprises determining whether to deliver said data to a particular one of said end-user devices via said WLAN interface and/or via said femtocell cellular interface based on parameters exchanged with said particular one of said end-user devices.

Advantageously, a portion of a datastream is transmitted to said one or more end-user devices via said WLAN interface and a remaining portion of said datastream is transmitted to said one or more end-user devices via said cellular interface.

Advantageously, the method further comprises transmitting by said device, said data via an IP connection.

Advantageously, said femtocell cellular interface and/or said WLAN interface is configured based on parameters exchanged with said one or more end-user device.

Advantageously, the method further comprises determining whether to receive said data from a particular one of said end-user devices utilizing said WLAN interface and/or utilizing said femtocell cellular interface based on parameters exchanged with said particular one of said end-user devices.

Advantageously, a portion of a datastream is received via said WLAN interface and a remaining portion of said datastream is received via said femtocell cellular interface.

Advantageously, said one or more circuits are operable to receive said data via an IP connection.

Advantageously, said one or more circuits are operable to packetize said data into packets formatted in compliance with WLAN protocols and/or cellular protocols utilized by said WLAN interface.

Advantageously, said one or more circuits are operable to determine whether to deliver said data to a particular one of said end-user devices via said WLAN interface and/or via said femtocell cellular interface based on parameters exchanged with said particular one of said end-user devices.

Advantageously, a portion of a datastream is transmitted to said one or more end-user devices via said WLAN interface and a remaining portion of said datastream is transmitted to said one or more end-user devices via said femtocell cellular interface.

Advantageously, said one or more circuits are operable to transmit said data via an IP connection.

Advantageously, said femtocell cellular interface and/or said WLAN interface is configured based on parameters exchanged with said one or more end-user device.

Advantageously, said one or more circuits are operable to determine whether to receive said data from a particular one of said end-user devices utilizing said WLAN interface and/or utilizing said femtocell cellular interface based on parameters exchanged with said particular one of said end-user devices.

Advantageously, a portion of a datastream is received via said WLAN interface and a remaining portion of said datastream is received via said femtocell cellular interface.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a diagram illustrating an exemplary hybrid network comprising femtocells and access points, in accordance with an embodiment of the invention.
FIG. 1B is a block diagram illustrating exemplary details of a hybrid network comprising integrated femtocell and WLAN access point (IFWAP) devices, in accordance with an embodiment of the invention.
FIG. 2A is a block diagram of an exemplary IFWAP device, in accordance with an embodiment of the invention.
FIG. 2B is a block diagram of exemplary user equipment, in accordance with an embodiment of the invention.
FIG. 3A is a flowchart illustrating exemplary steps for communicating data to cellular and/or WLAN enabled end-user devices via an integrated femtocell and WLAN access point (IFWAP) device, in accordance with an embodiment of the invention.
FIG. 3B is a flowchart illustrating exemplary steps for communicating data from cellular and/or WLAN enabled end-user devices to the IP backbone via an integrated femtocell and WLAN access point (IFWAP) device, in accordance with an embodiment of the invention.

### DETAILED DESCRIPTION OF THE INVENTION

Certain embodiments of the invention may be found in a method and system for integrated femtocell and WLAN access point. In various embodiments of the invention, an IFWAP device comprises an integrated WLAN interface and femtocell interface. The IFWAP device may be operable to receive data, determine a destination of the received data, and transmit the received data to one or more end-user devices via the integrated WLAN interface and/or the integrated femtocell cellular interface, based on said determined destination. In various embodiments of the invention, the IFWAP device may be operable to receive data from one or more end-user devices via the integrated WLAN interface and/or the integrated femtocell cellular interface, process the received data to re-format and/or re-packetize it into one or more corresponding IP packets, and transmit the one or more IP packets to one or more destination devices via a single network connection and/or a network controller. The IFWAP device may transmit and/or receive the data via an IP connection. The IFWAP device may re-format and/or re-packetize data into packets formatted in compliance with WLAN and/or cellular protocols. The femtocell cellular interface and/or the WLAN interface may be configured based on parameters exchanged with one or more end-user devices. The IFWAP device may determine which interface(s) to utilize for transmission of the data based on parameters exchanged with one or more end-user devices. The IFWAP device may transmit a portion of a datastream via the femtocell cellular interface and a remaining portion of the datastream via the WLAN interface.

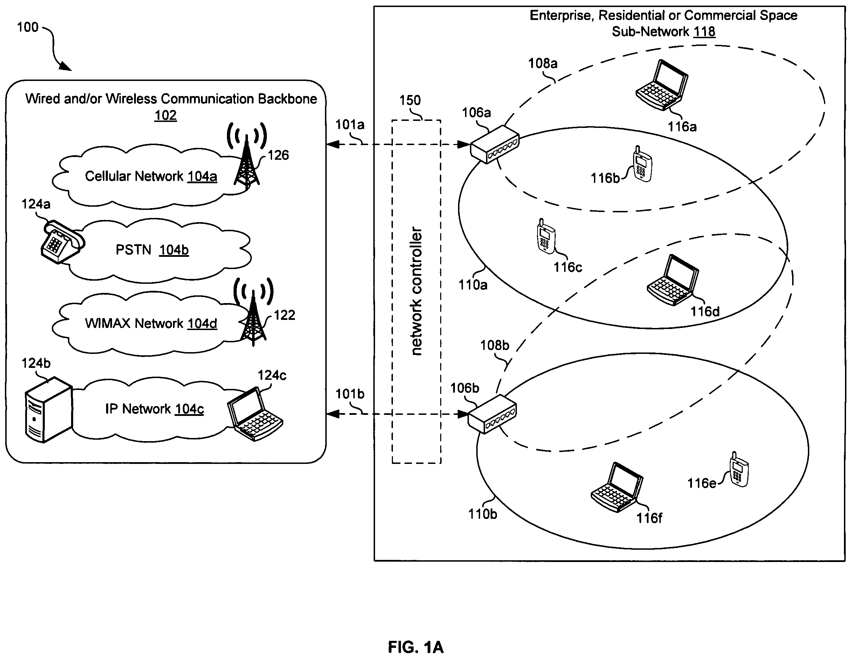

FIG. 1A is a diagram illustrating an exemplary hybrid network comprising femtocells and access points, in accordance with an embodiment of the invention. Referring to FIG. 1A, there is shown a system of networks 100 comprising the wired and/or wireless communication backbone 102 and a hybrid sub-network 118.

The wired and/or wireless communication backbone 102 may comprise suitable logic, circuitry and/or code that may be operable to provide access to a plurality of networks, for example, a cellular network 104a, a public switched telephone network (PSTN) 104b, an IP network 104c, and/or a WiMAX network 104d. The wired and/or wireless communication backbone 102 and/or the networks 104 may comprise various endpoint and/or user equipment devices. Exemplary devices of the various networks 104 comprise a cellular base station 122 of the cellular network 104a, a telephone 124a of the PSTN 104b, a WiMAX base station 122 of the WiMAX network 104d, and a laptop 124c and application server 124b of the IP network 104c. In this regard, the cellular base station 126, telephone 124a, WiMAX base station 122, laptop 124c, and/or the application server 124b may be accessible to devices within the sub-network 118 via the wired and/or wireless communication backbone 102. In addition, the backbone 102 may be communicatively coupled to, for example, other sub-networks and/or private intranets (not shown). Accordingly, the wired and/or wireless communication backbone 102 may enable the end-user devices 116 to communicate with remote resources such as other user equipment, an application server on the Internet and other network devices that may be communicatively coupled via the networks 104 for example.

The hybrid sub-network 118 comprises integrated femtocell and WLAN access point (IFWAP) devices 106a and 106b, collectively referenced as IFWAP devices 106, and a plurality of end-user devices 116a...116f collectively referenced as end-user devices 116. The IFWAP devices 106 may be installed, for example, in an enterprise system, commercial properties, residential properties and/or multi-tenant properties. The enterprise system may be deployed in office buildings, schools, hospitals or government buildings, for example. The commercial properties may comprise, for example, stores, restaurants and/or offices. The residential properties may comprise, for example, single-family homes, home offices, and/or town-houses. Multi-tenant properties may comprise residential and/or commercial tenants such as apartments, condos, hotels, and/or high rises. In various embodiments of the invention, all or a portion of the hybrid sub-network 118 may be managed by a service provider which licenses cellular frequencies utilized by the IFWAP devices 106a and 106b. In instances that the sub-network 118 comprises multiple IFWAP devices, the sub-network 118 may also comprise a network controller 150 such as an hybrid network controller that may be operable to control and/or manage communications to, from, and/or between the IFWAP devices.

The connections 101 a and 101b, collectively referenced as connections 101, may comprise one or more optical, wired, and/or wireless links utilizing protocols such as Ethernet, digital subscriber line (DSL), passive optical network (PON), Digital Video Broadcast (DVB), T1/E1, and WiMAX. The connections 101 may be operable to carry traffic to and/or from the communication backbone 102. In various embodiments of the invention, the connections 101 may utilize the Internet Protocol (IP). For example, the connections 101 may transport IP packets to one or more of the networks 104 described with respect to FIG. 1A. In this manner, the connections 101 may provide access to the Internet and/or one or more private networks.

The IFWAP devices 106 may each comprise suitable logic, circuitry, and/or code operable to perform functions of a femtocell and a WLAN access point. In regards to femtocell functionality, the IFWAP devices may be operable to communicate wirelessly with the end-user devices 116 utilizing one or more cellular standards comprising IS-95, CDMA, GSM, TDMA, GPRS, EDGE, UMTS/WCDMA, TD-SCDMA, HSDPA, extensions thereto, and/or variants thereof. Data comprises any analog and/or digital information including but not limited to voice, Internet data, and/or multimedia content. Multimedia content may comprise audio and/or visual content comprising, video, still images, animated images, and/or textual content. The femtocells 112 may each communicate with various devices such as the end-user devices 116. Exemplary cellular standards supported by the femtocells 112 may be specified in the International Mobile Telecomunnications-2000 (IMT-2000) standard and/or developed by the 3rd generation partnership project (3GPP) and/or the 3rd generation partnership project 2 (3GPP2). In regards to WLAN access point functionality, the IFWAP devices 106 may be operable to provide WLAN, Wi-Fi and/or WiMax connectivity to one or more of the end-user devices 116 utilizing standards and/or protocols such as IEEE 802.11. For example, the IFWAP devices 106 may each provide Internet connectivity, multimedia downloads, and/or IP telephony sessions to the end-user devices 116. In various embodiments of the invention, each of the IFWAP devices 106 may be operable to support simultaneous connections between itself and a single end-user device 116. Similarly, each of the IFWAP devices 106 may be operable to support a connection to an end-user device which is simultaneously connected to one or more access points and/or femtocells.

The end-user device 116 may each comprise suitable logic, circuitry, and/or code that may be operable to communicate wirelessly utilizing one or more standards. For example, the end-user devices 116 may each be operable to communicate utilizing wireless standards such as WiMAX, IEEE 802.11, Bluetooth, Zigbee, and/or variants thereof. In addition, the end-user devices 116 may each be operable to communicate utilizing one or more cellular standards such as IS-95, CDMA, EVDO, GSM, TDMA, GPRS, EDGE, UMTS/WCDMA, TD-SCDMA, HSDPA, WiMax and/or LTE. Exemplary end-user devices 116 may comprise laptop computers, mobile phones, media players, video and/or still cameras, game consoles and/or location determination enabled devices. The end-user devices 116 may be enabled to receive, process, and present multimedia content and may additionally be enabled run a web browser or other applications for providing Internet services to a user of the end-user devices 116. In various embodiments of the invention, the end-user devices 116 may be multimode devices that may be operable to communicate simultaneously with one or more IFWAP devices 106, one or more femtocells, one or more access points, or a combination thereof. For example, the end-user device 116d may be enabled to communicate simultaneously with both IFWAP devices 106.

In operation, the IFWAP devices 106a and 106b may provide cellular service to cellular devices within their respective femtocell coverage areas 108a and 108b and may provide WLAN services to devices within their respective WLAN coverage areas 110a and 110b. Exemplary WLAN services may be provided utilizing protocols comprising IEEE 802.11 protocols. The IFWAP devices 106 may manage communications of the end-user devices 116.

In instances that The IFWAP devices 106 may each manage communication and/or quality of service (QoS) for traffic transported between one or more end-user devices 116 and the backbone 102 via the connections 101a and 101b. In addition, the IFWAP devices 106 may each control one or more aspects of communication with the end-user devices 116. For example, load balancing, authentication and/or security management, session initiation, session processing, resource allocation and mobility management of end-user devices 116 may be managed by the IFWAP devices 106. In addition, each of the IFWAP devices 106 may limit or control access and/or hand-offs between its femtocell cellular interface and its WLAN interface and/or between itself and other IFWAP devices, femtocells, and/or access points. For example, the end-user device 116b may be handed off from a femtocell cellular interface of the IFWAP device 116a to a WLAN interface of the IFWAP device 106a. Similarly, the end-user device 116d may be handed off from the WLAN interface of the IFWAP device 106a to the femtocell cellular interface of the IFWAP device 106b. In some embodiments of the invention, the end-user device 116d may be simultaneously serviced by a WLAN interface of the IFWAP device 106a and a femtocell cellular interface of the IFWAP device 106b. In an exemplary embodiment of the invention, IFWAP device 106a may communicate with the end-user device 116a utilizing cellular protocols, with the end-user device 116b utilizing both cellular and IEEE 802.11 protocols, and with the end-user device 116c and 116d utilizing IEEE 802.11 protocols. Similarly, the IFWAP device 106b may communicate with the end-user device 116d utilizing cellular protocols and with the end-user devices 116e and 116f utilizing IEEE 802.11 protocols.

In various embodiments of the invention, the IFWAP devices 106 may communicate parameters to and/or receive parameters from the end-user devices 116 to manage communications among the end-user devices and between the end-user devices and devices such as the telephone 124a, the server 124b, and the laptop 124c in the networks 104. Exemplary parameters may comprise types and/or amounts of data requested or being delivered to and/or from an end-user device 116, a location of an end-user device 116, a service provider and/or subscriptions of an end-user device 116, and capabilities of an end-user device 116. Other exemplary parameters may comprise memory usage of the IFWAP devices 106, processor usage of the IFWAP devices 106, number of end-user devices in communication with the IFWAP devices 106, location of the IFWAP devices 106, security settings of an IFWAP device, and a service provider of the IFWAP devices 106. Still other exemplary parameters may comprise available bandwidth of the connections 101 a and 101b, round-trip path delay for communicated data, received signal strength, measured interference (SNR, SINR, CINR), bit error rates, and battery strength.

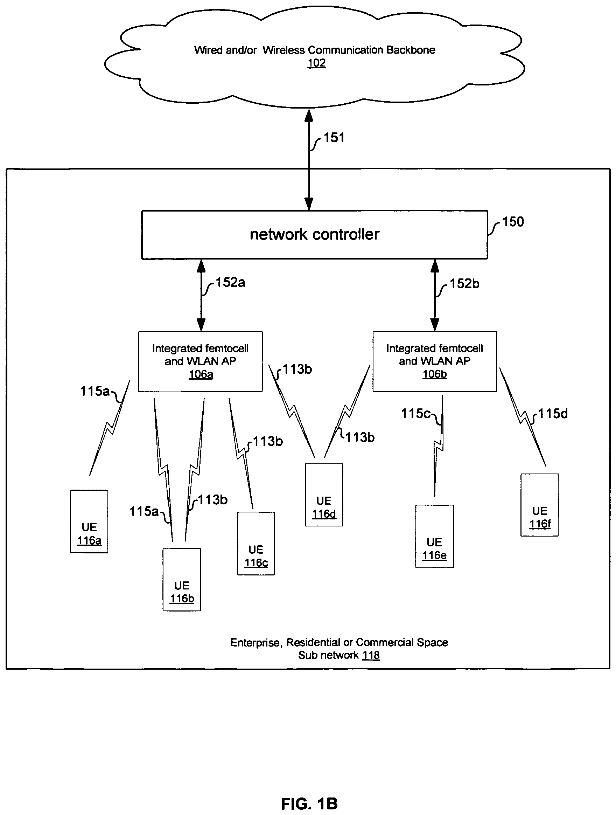

FIG. 1B is a block diagram illustrating exemplary details of a hybrid network comprising integrated femtocell and WLAN access point (IFWAP) devices, in accordance with an embodiment of the invention. Referring to FIG. 1B, there is shown the wired and/or wireless communication backbone 102, the IFWAP devices 106, the end-user devices 116, a network controller 150 such as an hybrid network controller, and the connections 151, 152a, and 152b. In various embodiments of the invention, the connection may utilize Internet Protocol (IP) at the network layer; however, the invention is not so limited and may utilize other network layer protocols.

The connections 151, 152a, and 152b, may each comprise one or more optical, wired, and/or wireless links utilizing protocols such as Ethernet, digital subscriber line (DSL), passive optical network (PON), Digital Video Broadcast (DVB), T1/E1, and WiMAX. The connection 151 may be operable to carry traffic between the communication backbone 102 and the network controller 150. In various embodiments of the invention, the connection 151 may utilize the Internet Protocol (IP). For example, the connections 101 may transport IP packets to one or more of the networks 104 described with respect to FIG. 1A. In this manner, the connections 101 may provide access to the Internet and/or one or more private networks. The connection 152a may be operable to carry traffic between the network controller 150 and the IFWAP device 106a. The connection 152b may be operable to carry traffic between the network controller 150 and the I FWAP device 106b.

Also shown are connections 115a, ..., 115c, collectively referenced as connections 115, between the IFWAP devices 106 and some of the end-user devices 116 and the connections 113a ... 113b, collectively referenced as connections 113, between the IFWAP devices 106 and some of the end-user devices 116. The connections 113 may each comprise a wireless link utilizing cellular protocols. The connections 115 may each comprise a wireless link utilizing IEEE 802.11, WiMAX, or similar protocols. In some embodiments of the invention, each of the connections 113 and/or 115 may utilize one or more proprietary protocols.

In operation, the IFWAP devices 106 and the network controller 150 may interoperate to communicate data between the sub-network 118 and remote endpoints via the wired and/or wireless backbone 102. In this regard, the IFWAP device 106a may communicate data from one or more end-user devices 116 to the network controller 150 via the connection 152a, and the IFWAP device 106b may communicate data from the end-user devices 116 to the network controller 150 via the connection 152b. The network controller 150 may communicate data from the IFWAP devices 106 to the communication backbone 102. Data from a remote endpoint may be communicated to the network controller 150 via the connection 151. Data from the network controller 150 may be communicated to the IFWAP device 106a via the connection 152a and to the IFWAP device 152b via the connection 152b. Data from the IFWAP device 106a may be communicated to one or more end-user devices 116 via a WLAN connection 113 and/or a cellular connection 115. Data from the IFWAP device 106b may be communicated to one or more end-user devices 116 via a WLAN connection 113 and/or a cellular connection 115.

In one embodiment of the invention, data transmitted an IFWAP device 106 may comprise a common source address, regardless of the end-user device 116 from which the data originated. Similarly, data transmitted to the IFWAP device 106a may comprise a common destination address, and data communicated to the IFWAP device 106b may comprise a common destination address, regardless of the end-user device(s) 116 for which the data is destined. That is, the IFWAP devices 106a and 106b may be operable to transcode packets and/or translate network addresses. Thus, end-user devices 116 coupled to the IFWAP device 106a via a cellular connection 115 and end-user devices 116 coupled to the IFWAP device 106a via a WLAN connection 113 may be reached via a single network layer address associated with the IFWAP device 106a. Similarly, end-user devices 116 coupled to the IFWAP device 106b via a cellular connection 115 and end-user devices 116 coupled to the IFWAP device 106a via a WLAN connection 113 may all be reachable via a single network layer address associated with the IFWAP device 106b.

The IFWAP devices 106a and 106b may allocate, reallocate, reserve and/or deallocate bandwidth on the connections 152a and 152b, respectively. In this regard, it may be determined which IFWAP device 106 may handle a call and/or session with an end-user device 116. In addition, the IFWAP devices 106 may handle quality of service (QoS) for traffic that is transported via the connections 152a and 152b.

In an exemplary embodiment of the invention, the end-user device 116c may receive a phone call from a remote landline telephone 124a in the PSTN network 104b and the IFWAP devices 106a and 106b and the network controller 150 may interoperate to determine to route the call to the end-user device 116c via the connection 152a and the cellular connection 113b. In this regard, resources on the connection 152a, within the IFWAP device 106a, and within the network controller 150 may be allocated for the call. Accordingly, the IFWAP device 106a and the end-user device 116c may exchange data and/or voice via the cellular connection 113b. The IFWAP device 106a may re-packetize data received from the end-user device 116c into one or more IP packets and the IP packets may be further encapsulated, encoded, modulated, or otherwise processed. The IP packets may then be routed via the connection 152a, the network controller 150, and the connection 151 to the backbone 102.

In another exemplary embodiment of the invention, the end-user device 116e may communicate with the application server 124b on the Internet to download multimedia data. The IFWAP devices 106b may determine whether to download the multimedia data via a cellular connection 113 or a WLAN connection 115. For example, the IFWAP device 106b may determine a WLAN connection is best suited for transferring the data to the end-user device 116e. The server 124 may send the data to the IFWAP device 106b via the backbone 102, the network connection 150, and the connection 152b and the IFWAP device 106b may transmit the data to the end-user device 116e utilizing IEEE 802.11, or similar, standards.

In another exemplary embodiment of the invention, each of the IFWAP devices 106 may be operable to route the multimedia content to a plurality of the end-user devices 116. In this regard, the IFWAP device 106a may be operable to simultaneously communicate with the end-user devices 116a, ..., 116d and IFWAP device 106a may be operable to simultaneously communicate with the end-user devices 116a, ..., 116d. Furthermore, a datastream may be delivered to an end-user device 116 via a plurality of IFWAP devices 106. For example, a portion of a datastream may be delivered to the end-user device 116d via the IFWAP device 106a and a remaining portion of the datastream may be delivered to the end-user device 116d via the IFWAP device 106b.

In another embodiment of the invention, there may be only a single IFWAP device 106 and the single IFWAP device 106 may communicate directly with the communication backbone 102 without the assistance of a network controller 150. In such an embodiment, the IFWAP device 106 may be operable to manage communications with one or more end-use devices. Such management may comprise, for example, balancing the load between WLAN and cellular connections.

In another embodiment of the invention, the IFWAP devices 106 may each communicate with the communication backbone 102 and may communicate with each other via a hybrid AP-to-FC network bridge and controller.

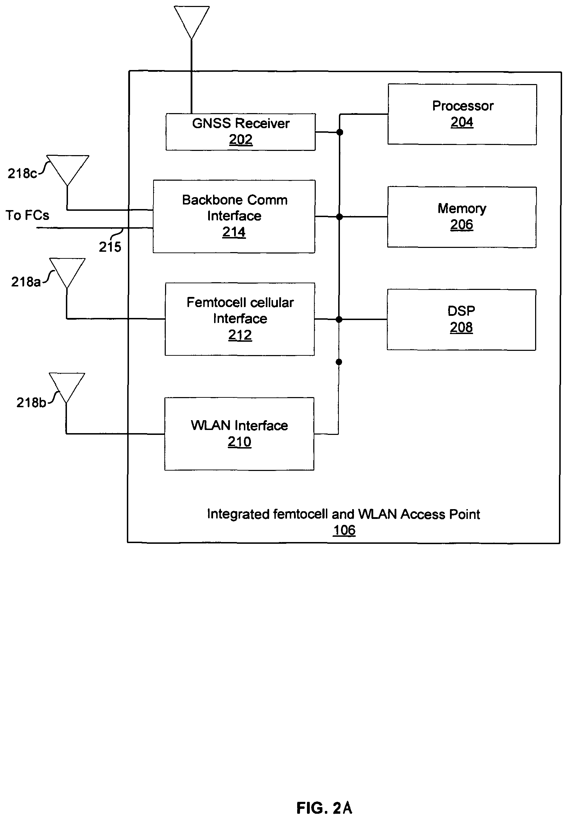

FIG. 2A is a block diagram of an exemplary IFWAP device, in accordance with an embodiment of the invention. Referring to FIG. 2A, there is shown an IFWAP device 106 comprising a GNSS receiver 202, a processer 204, a memory 206, a DSP 208, a WLAN interface 210, a femtocell cellular interface 212, and a backbone communications interface 214. The IFWAP device 106 may be as described with respect to FIGs. 1A and 1B.

In various embodiments of the invention, the IFWAP device 106 may be realized on a single integrated circuit, ASIC or system on chip. In this regard, the various portions of the IFWAP device 106 may be fabricated on a common substrate.

In various embodiments of the invention, the IFWAP device may comprise multiple integrated circuits on a common printed circuit board and/or in a common housing.

The GNSS receiver 202 may comprise suitable logic, circuitry and/or code to receive signals from one or more GNSS satellites, for example, GPS satellites. The received signals may comprise timing, ephemeris, long term orbit information, and/or almanac information that enable the GNSS receiver 168 to determine its location and/or time. GNSS coordinates determined based on received GNSS signals may be utilized in managing communications by the IFWAP device 106. Determined GNSS coordinates may be communicated to other devices in a network such as femtocells, access points, femtocell controllers, and access point controllers. Accordingly, the location of the IFWAP device 106 may be a determining factor in deciding how to manage data communicated in a hybrid network such as the sub-network 118.

The WLAN interface 210 may comprise suitable logic, circuitry, and/or code that may be operable to transmit and/or receive data to and/or from the UEs 116 utilizing, for example, IEEE 802.11 standards. The WLAN interface 210 may comprise or be communicatively coupled to an antenna 218b. In various embodiments of the invention, an AP 114 may utilize the same WLAN interface 210 for communicating with UEs 116 and with the backbone 102. The WLAN interface 210 may comprise suitable logic, circuitry, and/or code that may be operable to transmit and/or receive data to and/or from one or more UEs 116 via the antenna 218b. The WLAN interface 210 may be operable to perform exemplary operations or functions comprising amplification, down-conversion, filtering, demodulation, and analog to digital conversion of received signals and/or signals to be transmitted. In various exemplary embodiments of the invention, a connection 113 (FIG. 1B) to one or more UEs 116 may be established via the antenna 218b utilizing IEEE 802.11 protocols. The WLAN interface 210 may transmit and receive via an antenna 218b and antenna directionality may be controlled via one or more control signals and/or based on received control data. Additionally, transmitted signal strength of the WLAN interface 210 may be controlled via one or more control signals and/or based on received control data.

The femtocell cellular interface 212 may comprise suitable logic circuitry and/or code that may be operable to transmit and/or receive voice and/or data utilizing one or more cellular standards. The femtocell cellular interface 210 may comprise or be communicatively coupled to an antenna 218a. The femtocell cellular interface 212 may be operable to perform amplification, down-conversion, filtering, demodulation, and analog to digital conversion of received cellular signals and/or cellular signals to be transmitted. The femtocell cellular interface 212 may be operable to support communication over a plurality of connections utilizing time division multiple access (TDMA), code division multiple access (CDMA) and/or orthogonal frequency division multiplexing (OFDM) for example. In addition, exemplary cellular standards supported by the IFWAP device 106 may be specified in the International Mobile Telecomunnications-2000 (IMT-2000) standard and/or developed by the 3rid generation partnership project (3GPP) and/or the 3^{rd} generation partnership project 2 (3GPP2). In various embodiments of the invention, the femtocell cellular interface 212 may be enabled to measure received signal strength and may adjust a power level and/or a modulation scheme or level of transmitted signals. The femtocell cellular interface 212 may transmit and receive via an antenna 218a and antenna directionality may be controlled via one or more control signals and/or based on received control data. Additionally, transmitted signal strength of the femtocell cellular interface 212 may be controlled via one or more control signals and/or based on received control data.

The backbone communications interface 214 may comprise suitable logic, circuitry, and/or code that may be operable to transmit and/or receive data to and/or from the backbone 102 via a wired or optical link 215 and/or an antenna 218c. The backbone communications interface 210 may comprise or be communicatively coupled to an antenna 218c and a wired or optical link 215. The backbone communications interface 214 may be operable to perform exemplary operations or functions comprising amplification, down-conversion, filtering, demodulation, and analog to digital conversion of received signals and/or signals to be transmitted. In various exemplary embodiments of the invention, a connection 101a (FIG. 1B) to the backbone 102 may be established via the wired or optical link 215 utilizing protocols such as such as Ethernet, digital subscriber line (DSL), passive optical network (PON), OX-x, Digital Video Broadcast (DVB), T1/E1, T3/E3, and/or the antenna 218c utilizing protocols such as IEEE 802.11 and WiMAX.

The processor 204 may comprise suitable logic, circuitry, and/or code that may enable processing data and/or controlling operations of the IFWAP device 106. In this regard, the processor 204 may be enabled to provide control signals to the various other blocks within the IFWAP device 106, for example the DSP 208, the memory 206, the femtocell cellular interface 210, the WLAN interface 212, and/or the backbone comm. interface 214. The processor 204 may also control data transfers between various portions of the IFWAP device 106. Additionally, the processor 204 may enable execution of applications programs and/or code. In various embodiments of the invention, the applications, programs, and/or code may enable, for example, parsing, transcoding, and/or otherwise processing data. In various embodiments of the invention, the applications, programs, and/or code may enable, for example, configuring or controlling operation of the DSP 208, the memory 206, the femtocell cellular interface 210, the WLAN interface 212, and/or the backbone comm. interface 214. In various embodiments of the invention, the processor 204 may receive control information from the end-user devices 116 and/or devices such as the server 124b coupled to the networks 104. In this regard, the processor 204 may be enabled to provide one or more signals to the DSP 208, the memory 206, the femtocell cellular interface 210, the WLAN interface 212, and/or the backbone comm. interface 214 to control communication among the IFWAP device 106, the backbone 102, and end-user devices 116. In addition, the processor 204 may control exemplary parameters such as power level, modulation scheme, error coding scheme, and/or data rates of transmitted cellular signals.

The memory 206 may comprise suitable logic, circuitry, and/or code that may enable storage or programming of information that includes parameters and/or code that may effectuate the operation of the IFWAP device 106. A portion of the programming information and/or parameters may be received from the end-user devices 116 and/or devices such as the server 124b coupled to the networks 104. The parameters may comprise configuration data and the code may comprise operational code such as software and/or firmware, but the information need not be limited in this regard. Moreover, the parameters may include adaptive filter and/or block coefficients. Additionally, the memory 206 may buffer or otherwise store received data and/or data to be transmitted. In various embodiments of the invention, the memory 306 may comprise one or more look-up tables which may be utilized for determining end-user devices to be serviced by the IFWAP device 106.

The DSP 208 may comprise suitable logic, circuitry, and/or code operable to perform computationally intensive processing of data. In various exemplary embodiments of the invention, the DSP 208 may operable to encode, decode, modulate, demodulate, encrypt, decrypt, scramble, descramble, and/or otherwise process data. In various embodiments of the invention, the DSP 208 may be enabled to adjust a modulation scheme, error coding scheme, and/or data rates of transmitted cellular signals data.

In operation, the IFWAP device 106 may handle communication between one or more end-user devices 116 and one or more remote communication devices such as the telephone 124a, the laptop 124b and/or the application server 124c. The IFWAP device 106 may exchange communication management messages with end-user devices 116 with which it communicates. Additionally or alternatively, the IFWAP device 106 may exchange control and/or management traffic with a hybrid network controller.

The processor 204 may utilize received management messages to configure the femtocell cellular interface 212, the WLAN interface 210, the backbone comm. interface 214, and/or the DSP 208. In this regard, one or more parameters of one or more communication connections may be configured. Exemplary parameters may comprise transmission power levels, error coding scheme for transmitted cellular signals, data rates for transmitted cellular signals, and modulation scheme for transmitted signals.

The IFWAP device 106 may determine characteristics such as bit error rates of received data, interference levels and signal strength of signals received via the femtocell cellular interface 210 and the WLAN interface 212, and available bandwidth of connections established with end-user devices 116. The measurements may be communicated to the UEs 116 and/or remote devices such as the server 124b. Additionally, the IFWAP device 106 may receive feedback from an end-user device 116 and the received feedback information may be communicated into the backbone 102 via the connection 101. The IFWAP device 106 may utilize determined characteristics and/or feedback information to determine whether to handle, transfer and/or handoff a call and/or data session via the femtocell cellular interface 212, the WLAN interface 210, or a combination thereof.

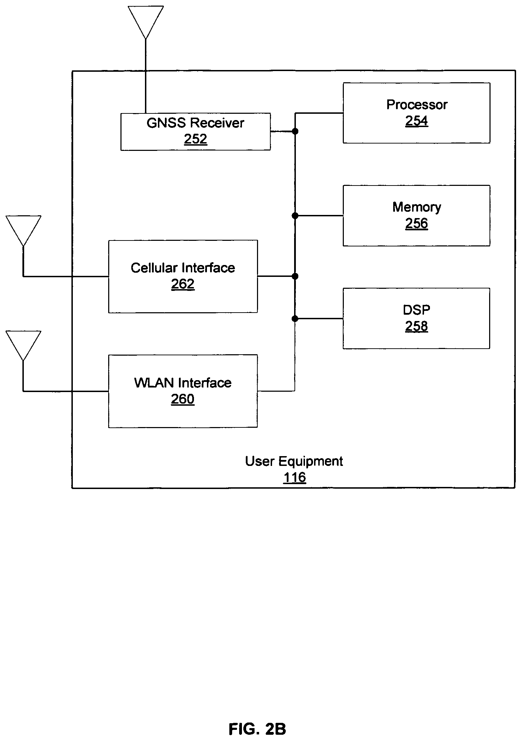

FIG. 2B is a block diagram of exemplary user equipment, in accordance with an embodiment of the invention. Referring to FIG. 2B, the end-user device 116 may comprise a GNSS receiver 252, a processer 254, a memory 256, a DSP 256, a cellular interface 262, and a WLAN interface 260. The end-user device 116 may be as described with respect to FIGs. 1A and 1B.

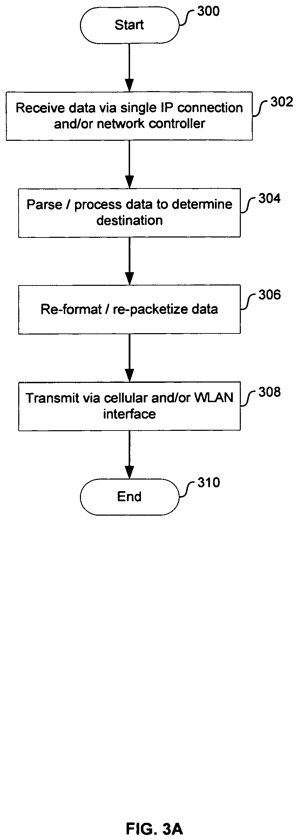

The GNSS receiver 252 may be as described with respect to FIG. 2A. The cellular interface 262 may be substantially similar to the cellular interface 212 described with respect to FIG. 3A. The WLAN interface 260 may be may be substantially similar to the WLAN interface 210 described with respect to FIG. 2A.

The processor 254 may comprise suitable logic, circuitry, and/or code that may enable processing data and/or controlling operations of the end-user device 116. In this regard, the processor 254 may be enabled to provide control signals to the various other blocks within the end-user device 116. The processor 254 may also control data transfers between various portions of the end-user device 116. Additionally, the processor 254 may enable execution of applications programs and/or code. In various embodiments of the invention, the applications, programs, and/or code may enable processing data. The applications, programs, and/or code may enable, for example, configuring or controlling operation of the cellular interface 262, the GNSS receiver 252, the WLAN TxRx 260, the DSP 258, and/or the memory 256. The processor 254 may receive control information from an IFWAP device 106. In this regard, the processor 254 may be enabled to provide one or more control signals to the cellular interface 262, the WLAN interface 360, the memory 256, and/or the DSP 258 to control communication between the end-user devices 116 and IFWAP device 106. In addition, the processor 254 may control parameters such as power level, modulation scheme, error coding scheme, and/or data rates of transmitted cellular and/or Wi-Fi signals.

The memory 256 may comprise suitable logic, circuitry, and/or code that may enable storage or programming of information that includes parameters and/or code that may effectuate the operation of the end-user device 116. A portion of the programming information and/or parameters may be received from an IFWAP device 106. Parameters may comprise configuration data and the code may comprise operational code such as software and/or firmware, but the information need not be limited in this regard. Moreover, the parameters may include adaptive filter and/or block coefficients. Additionally, the memory 256 may buffer or otherwise store received data and/or data to be transmitted. In various embodiments of the invention, the memory 256 may comprise one or more look-up tables which may be utilized to determine which IFWAP devices 106 are within range of the end-user device 116.

The DSP 258 may comprise suitable logic, circuitry, and/or code operable to perform computationally intensive processing of data. The DSP 258 may be operable to encode, decode, modulate, demodulate, encrypt, decrypt, scramble, descramble, and/or otherwise process data. In various embodiments of the invention, the DSP 258 may be enabled to adjust a modulation scheme, error coding scheme, and/or data rates of transmitted cellular and/or WLAN signal data.

In operation, the end-user device 116 may communicate with remote communication devices, for example, the telephone 124a, the laptop 124c and/or the application server 124b via one or more IFWAP devices 106. In this regard, the one or more IFWAP devices 106 may be assigned to handle a call and/or communication session between the end-user device 116 and a remote endpoint. In support of communications, the end-user device 116 may transmit and/or receive control information to and/or from the one or more IFWAP devices 106. Furthermore, the IFWAP devices 106 may handle QoS for data and/or voice traffic for the call and/or session.

In an exemplary embodiment of the invention, control messages from one or more IFWAP devices 106 may be received by the end-user device 116 via the cellular interface 262 and/or the WLAN interface 210. The processor 254 may utilize the received control information to configure the end-user device 116 and/or to manage call and/or session set up and/or call and/or session processing. In addition, the one or more IFWAP devices 106 may manage transmission power levels, error coding scheme, data rates, and modulation scheme for signals transmitted from the end-user device 116.

Furthermore, the end-user device 116 may communicate various operational status indications to the one or more IFWAP devices 106. For example, the cellular interface 262 and/or the WLAN interface 260 may determine characteristics such as interference levels and signal strength of desired signals received via a cellular and/or WLAN connection. Similarly, the DSP 256 and/or the processor 254 may determine bit error rates of received data and available bandwidth of the cellular and/or Wi-Fi connection. Information stored in the memory 256 and/or measurements taken by the cellular interface 262, WLAN interface 260 and/or DSP 258 may be communicated to the one or more IFWAP devices 106 via the cellular interface 262 and/or the WLAN interface 260.

In various embodiments of the invention, the end-user device 116 may be a multimode wireless device and may comprise a plurality of diverse wireless interfaces. In this regard, the end-user device 116 may be operable to receive signals from one or more one or more IFWAP devices 106 that may utilize different wireless standards. The end-user device 116 may be operable to select portions of information and/or combine information from the plurality of received signals based on the quality of received information and/or the quality of the received signals.

FIG. 3A illustrates exemplary steps for communicating data to cellular and/or WLAN enabled end-user devices via an integrated femtocell and WLAN access point (IFWAP) device, in accordance with an embodiment of the invention. Referring to FIG. 3A, the exemplary steps may begin with start step 300. Subsequent to step 300, the exemplary steps may advance to step 302.

In step 302, an IFWAP device may receive data from a plurality of sources via a single IP connection to the IP backbone. In instances that there are multiple IFWAP devices in a sub-network, the data may be received via a network controller, such as the network controller 150. In this regard, the data from the plurality of sources may comprise one or more types of data, such as multimedia and voice over IP, and may be destined for one or more end-user devices. Subsequent to step 302, the exemplary steps may advance to step 304.

In step 304, the IFWAP device may parse or otherwise process the received data to determine a destination of the data. In various exemplary embodiments of the invention, the IFWAP device may be operable to determine that some of the data is destined for a first end-user device and/or some of the data may be destined for a second end-user device. Subsequent to step 304, the exemplary steps may advance to step 306.

In step 306, the IFWAP device may re-format and/or re-packetize the received data into one or more datastreams. In this regard, the format of the re-formatted and/or re-packetized packets may correspond to a method by which they may be transmitted to their destination end-user device. In this regard, packets to be transmitted via a cellular connection may be formatted according to one or more cellular standards and packets to be transmitted via a WLAN connection may be formatted in compliance with, for example, IEEE 802.11 or WiMAX standards. In some instances, data may be transmitted via both a cellular connection and a WLAN connection and thus data may be replicated into multiple datastreams. Subsequent to step 306, the exemplary steps may advance to step 308.

In step 308, the packets may be transmitted via a femtocell cellular interface of the IFWAP device and/or a WLAN interface of the IFWAP device. Subsequent to step 308, the exemplary steps may end with step 310.

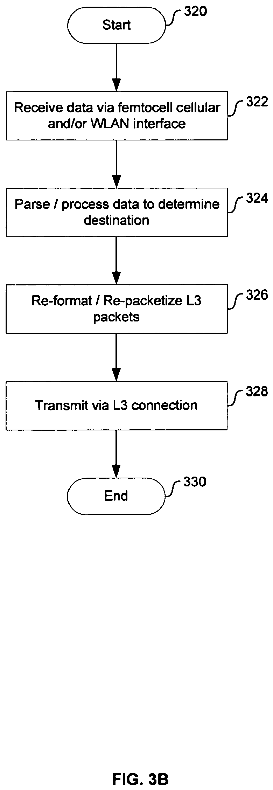

FIG. 3B illustrates exemplary steps for communicating data from cellular and/or WLAN enabled end-user devices to the IP backbone via an integrated femtocell and WLAN access point (IFWAP) device, in accordance with an embodiment of the invention. Referring to FIG. 3B, the exemplary steps may begin with start step 320. Subsequent to step 320, the exemplary steps may advance to step 322.

In step 322, the IFWAP device may receive data from one or more end-user devices via one or more femtocell cellular connections and/or one or more WLAN connections. Subsequent to step 322, the exemplary steps may advance to step 324.

In step 324, the IFWAP device may parse or otherwise process the data to determine one or more destinations for the data. In various exemplary embodiments of the invention, the IFWAP device may be operable to determine that some of the data is destined for a first endpoint accessible via an IP backbone and/or some of the data may be destined for a second endpoint accessible via the IP backbone. Subsequent to step 324, the exemplary steps may advance to step 326.

In step 326, the IFWAP device may re-format and/or re-packetize the received data. In this regard, data may be packetized into a packet comprising the appropriate destination IP address. Subsequent to step 326, the exemplary steps may advance to step 328.

In step 328, the packets may be transmitted via a wired, wireless, and/or optical connection to the IP backbone. In instances that there are multiple IFWAP devices, the re-formatted and/or re-packetized data may be communicated via a network controller, such as the network controller 150. Subsequent to step 308, the exemplary steps may end with step 330.

Aspects of a method and system for communicating via an integrated femtocell and WLAN access point are provided. In an exemplary embodiment of the invention, an IFWAP device 106 may comprise an integrated WLAN interface 210 and femtocell cellular interface 212. The IFWAP device 206 may be operable to receive data, determine a destination of the received data, and transmit the received data to one or more end-user devices 116 via the integrated WLAN interface 210 and/or the integrated femtocell cellular interface 212 based on said determined destination.

In an exemplary embodiment of the invention, the IFWAP device 206 may be operable to receive data from the one or more end-user devices 116 via the integrated WLAN interface 210 and/or the integrated femtocell cellular interface 212, process the received data to re-format and/or re-packetize it into one or more corresponding IP packets, and transmit the one or more IP packets to one or more devices 104 via a network connection 151. The IFWAP device 206 may transmit and/or receive the data via an IP connection. The IFWAP device 206 may re-format and/or re-packetize data into packets formatted in compliance with WLAN and/or cellular protocols. The femtocell cellular interface 212 and/or the WLAN interface 210 may be configured based on parameters exchanged with one or more end-user devices. The IFWAP device 206 may determine which interface(s) to utilize for transmission of the data based on parameters exchanged with one or more end-user devices 116. The IFWAP device 106 may transmit a portion of a datastream via the femtocell cellular interface 212 and a remaining portion of the datastream via the WLAN interface 210.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for integrated femtocell and WLAN access point.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication for use in a device comprising an integrated WLAN (210) and an integrated femtocell cellular interface (212), the method comprising:
receiving (302) data;
determining (304) a destination of said received data; and
transmitting (308) said received data to one or more end-user devices via said integrated WLAN interface (210) and/or said integrated femtocell cellular interface (212) based on said determined destination;
wherein the method further comprises:
determining characteristics comprising at least one of the following: bit error rates of said received data;
interference levels and signal strength of signals received via said femtocell cellular interface (212) and said WLAN interface (210); and
available bandwidth of connections established with end-user devices (116); and
utilizing said determined characteristics to determine whether to handle, transfer and/or handoff a transmission of said received data via said femtocell cellular interface (212), said WLAN interface (210), or a combination thereof.

2. The method according to claim 1 further comprising:
communicating said determined characteristics to said end-user devices (116);
receiving feedback from at least one of said end-user devices (116);
utilizing said determined characteristics and feedback information of said at least one end user device to determine whether to handle, transfer and/or handoff a transmission of said received data via said femtocell cellular interface (212), said WLAN interface (210), or a combination thereof.

3. The method according to claim 1 comprising receiving (302) by said device, said data via an IP connection.

4. The method according to claim 1 comprising re-packetizing (306; 326) said data into packets formatted in compliance with WLAN protocols and/or cellular protocols.

5. The method according to claim 1, wherein said received data comprises a datastream, wherein a portion of said datastream is transmitted to said one or more end-user devices via said WLAN interface (210) and a remaining portion of said datastream is transmitted to said one or more end-user devices via said cellular interface (212).

6. The method according to claim 1 comprising:
receiving (322) data from one or more end-user devices via said integrated WLAN interface (210) and/or said integrated femtocell cellular interface (212);
processing (326) said received data to re-format and/or re-packetize it into one or more corresponding IP packets; and
transmitting (328) said one or more IP packets to one or more destination devices via a single network connection.

7. The method according to claim 6 comprising transmitting by said device, said data via an IP connection.

8. The method according to claim 6, wherein said femtocell cellular interface (212) and/or said WLAN interface (210) is configured based on parameters exchanged with said one or more end-user device.

9. The method according to claim 6 comprising determining whether to receive said data from a particular one of said end-user devices utilizing said WLAN interface (210) and/or utilizing said femtocell cellular interface (212) based on parameters exchanged with said particular one of said end-user devices.

10. The method according to claim 6, wherein a portion of a datastream is received via said WLAN interface (210) and a remaining portion of said datastream is received via said femtocell cellular interface (212).

11. A system for networking, the system comprising:
one or more circuits comprising a WLAN interface (210) and a femtocell cellular interface (212) integrated on a common substrate and/or in a common housing, wherein said one or more circuits are operable to:
receive data;
determine a destination of said received data; and
transmit said received data to one or more end-user devices via said WLAN interface (210) and/or said femtocell cellular interface (212) based on said determined destination;
wherein said one or more circuits are further operable to:
determine characteristics comprising at least one of the following:
bit error rates of said received data;
interference levels and signal strength of signals received via said femtocell cellular interface (212) and said WLAN interface (210); and
available bandwidth of connections established with end-user devices (116); and
utilize said determined characteristics to determine whether to handle, transfer and/or handoff a transmission of said received data via said femtocell cellular interface (212), said WLAN interface (210), or a combination thereof.

12. The system according to claim 11, wherein said one or more circuits are further operable to:
communicate said determined characteristics to said end-user devices (116);
receive feedback from at least one of said end-user devices (116);
utilize said determined characteristics and feedback information of said at least one end user device to determine whether to handle, transfer and/or handoff a transmission of said received data via said femtocell cellular interface (212), said WLAN interface (210), or a combination thereof.

13. The system according to claim 11, wherein said one or more circuits are operable to receive said data via an IP connection.

14. The system according to claim 11, wherein said one or more circuits are operable to packetize said data into packets formatted in compliance with WLAN protocols and/or cellular protocols.

15. The system according to claim 11, wherein said received data comprises a datastream, wherein a portion of said datastream is transmitted to said one or more end-user devices via said WLAN interface (210) and a remaining portion of said datastream is transmitted to said one or more end-user devices via said femtocell cellular interface (212).

## Patentansprüche

1. Verfahren zur Kommunikation zur Verwendung in einer Vorrichtung, die eine integrierte WLAN-Schnittstelle (210) und eine integrierte zellulare Femtozellen-Schnittstelle (212) aufweist, wobei das Verfahren umfasst:
Empfangen (302) von Daten;
Bestimmen (304) eines Ziels der empfangenen Daten; und
Senden (308) der empfangenen Daten an ein oder mehrere Endnutzergeräte über die integrierte WLAN-Schnittstelle (210) und/oder die integrierte zellulare Femtozellen-Schnittstelle (212) basierend auf dem bestimmten Ziel;
wobei das Verfahren des Weiteren umfasst:
Bestimmen von Eigenschaften, die wenigstens eines der folgenden aufweisen:
Bitfehlerraten der empfangenen Daten;
Interferenzpegel und Signalstärke von Signalen, die über die zellulare Femtozellen-Schnittstelle (212) und die WLAN-Schnittstelle (210) empfangen werden; und
verfügbare Bandbreite von Verbindungen, die mit Endnutzergeräten (116) hergestellt werden; und
Verwenden der bestimmten Eigenschaften um zu bestimmen, ob eine Übertragung der empfangenen Daten über die zellulare Femtozellen-Schnittstelle (212), die WLAN-Schnittstelle (210) oder eine Kombination davon zu handhaben, weiterzuleiten und/oder zu übergeben ist.

2. Verfahren nach Anspruch 1, das des Weiteren umfasst:
Kommunizieren der bestimmten Eigenschaften an die Endnutzergeräte (116);
Empfangen von Feedback von wenigstens einem der Endnutzergeräte (116);
Verwenden der bestimmten Eigenschaften und der Feedback-Informationen des wenigstens einen Endnutzergeräts um zu bestimmen, ob eine Übertragung der empfangenen Daten über die zellulare Femtozellen-Schnittstelle (212), die WLAN-Schnittstelle (210) oder eine Kombination davon zu handhaben, weiterzuleiten und/oder zu übergeben ist.

3. Verfahren nach Anspruch 1, das das Empfangen (302) der Daten durch das Gerät über eine IP-Verbindung umfasst.

4. Verfahren nach Anspruch 1, das das Neupaketieren (306; 326) der Daten in Pakete umfasst, die in Übereinstimmung mit WLAN-Protokollen und/oder zellularen Protokollen formatiert sind.

5. Verfahren nach Anspruch 1, wobei die empfangenen Daten einen Datenstrom aufweisen, wobei ein Teil des Datenstroms über die WLAN-Schnittstelle (210) an das eine oder die mehreren Endnutzergeräte gesendet wird und ein verbleibender Teil des Datenstroms über die zellulare Schnittstelle (212) an das eine oder die mehreren Endnutzergeräte gesendet wird.

6. Verfahren nach Anspruch 1, das umfasst:
Empfangen (322) von Daten von einem oder mehreren Endnutzergeräten über die integrierte WLAN-Schnittstelle (210) und/oder die integrierte zellulare Femtozellen-Schnittstelle (212);
Verarbeiten (326) der empfangenen Daten, um sie in ein oder mehrere entsprechende IP-Pakete umzuformatieren und/oder neu zu paketisieren; und
Senden (328) des einen oder der mehreren IP-Pakete über eine einzige Netzwerkverbindung an ein oder mehrere Zielgeräte.

7. Verfahren nach Anspruch 6, das das Senden der Daten durch das Gerät über eine IP-Verbindung umfasst.

8. Verfahren nach Anspruch 6, wobei die zellulare Femtozellen-Schnittstelle (212) und/oder die WLAN-Schnittstelle (210) basierend auf Parametern konfiguriert werden, die mit dem einen oder den mehreren Endnutzergeräten ausgetauscht werden.

9. Verfahren nach Anspruch 6, das das Bestimmen umfasst, ob die Daten von einem bestimmten der Endnutzergeräte unter Verwendung der WLAN-Schnittstelle (210) und/oder unter Verwendung der zellularen Femtozellen-Schnittstelle (212) zu empfangen sind, basierend auf Parametern, die mit dem bestimmten der Endnutzergeräte ausgetauscht werden.

10. Verfahren nach Anspruch 6, wobei ein Teil eines Datenstroms über die WLAN-Schnittstelle (210) empfangen wird und ein verbleibender Teil des Datenstroms über die zellulare Femtozellen-Schnittstelle (212) empfangen wird.

11. System zur Vernetzung, wobei das System aufweist:
eine oder mehrere Schaltungen, die eine integrierte WLAN-Schnittstelle (210) und eine integrierte zellulare Femtozellen-Schnittstelle (212) aufweisen, die auf einem gemeinsamen Substrat und/oder in einem gemeinsamen Gehäuse integriert sind, wobei die eine oder die mehreren Schaltungen betreibbar sind zum:
Empfangen von Daten;
Bestimmen eines Ziels der empfangenen Daten; und
Senden der empfangenen Daten an ein oder mehrere Endnutzergeräte über die WLAN-Schnittstelle (210) und/oder die zellulare Femtozellen-Schnittstelle (212) basierend auf dem bestimmten Ziel;
wobei die eine oder die mehreren Schaltungen des Weiteren betreibbar sind zum:
Bestimmen von Eigenschaften, die wenigstens eines der folgenden aufweisen:
Bitfehlerraten der empfangenen Daten;
Interferenzpegel und Signalstärke von Signalen, die über die zellulare Femtozellen-Schnittstelle (212) und die WLAN-Schnittstelle (210) empfangen werden; und
verfügbare Bandbreite von Verbindungen, die mit Endnutzergeräten (116) hergestellt werden; und
Verwenden der bestimmten Eigenschaften um zu bestimmen, ob eine Übertragung der empfangenen Daten über die zellulare Femtozellen-Schnittstelle (212), die WLAN-Schnittstelle (210) oder eine Kombination davon zu handhaben, weiterzuleiten und/oder zu übergeben ist.

12. System nach Anspruch 11, wobei die eine oder die mehreren Schaltungen des Weiteren betreibbar sind zum:
Kommunizieren der bestimmten Eigenschaften an die Endnutzergeräte (116);
Empfangen von Feedback von wenigstens einem der Endnutzergeräte (116);
Verwenden der bestimmten Eigenschaften und der Feedback-Informationen des wenigstens einen Endnutzergeräts um zu bestimmen, ob eine Übertragung der empfangenen Daten über die zellulare Femtozellen-Schnittstelle (212), die WLAN-Schnittstelle (210) oder eine Kombination davon zu handhaben, weiterzuleiten und/oder zu übergeben ist.

13. System nach Anspruch 11, wobei die eine oder die mehreren Schaltungen dazu betreibbar sind, die Daten über eine IP-Verbindung zu empfangen.

14. System nach Anspruch 11, wobei die eine oder die mehreren Schaltungen dazu betreibbar sind, die Daten in Pakete zu paketisieren, die in Übereinstimmung mit WLAN-Protokollen und/oder zellularen Protokollen formatiert sind.

15. System nach Anspruch 11, wobei die empfangenen Daten einen Datenstrom aufweisen, wobei ein Teil des Datenstroms über die WLAN-Schnittstelle (210) an das eine oder die mehreren Endnutzergeräte gesendet wird und ein verbleibender Teil des Datenstroms über die zellulare Femtozellen-Schnittstelle (212) an das eine oder die mehreren Endnutzergeräte gesendet wird.

## Revendications

1. Procédé de communication destiné à une utilisation dans un dispositif comprenant un WLAN intégré (210) et une interface cellulaire à femtocell intégré (212), le procédé comprenant :
la réception (302) de données ;
la détermination (304) d'une destination desdites données reçues ; et
la transmission (308) desdites données reçues à un ou plusieurs dispositifs d'utilisateurs finaux par l'intermédiaire de ladite interface WLAN intégré (210) et/ou de ladite interface cellulaire à femtocell intégré (212) sur la base de ladite destination déterminée ;
dans lequel le procédé comprend en outre :
la détermination de caractéristiques comprenant au moins un élément de ce qui suit :
des taux d'erreur binaire desdites données reçues ;
des niveaux d'interférence et une intensité de signal des signaux reçus par l'intermédiaire de ladite interface cellulaire à femtocell (212) et de ladite interface WLAN (210) ; et
une bande passante disponible de connexions établies avec des dispositifs d'utilisateurs finaux (116) ; et
l'utilisation desdites caractéristiques déterminées pour déterminer s'il faut gérer, transférer et/ou effectuer un transfert intercellulaire d'une transmission desdites données reçues par l'intermédiaire de ladite interface cellulaire à femtocell (212), de ladite interface WLAN (210), ou d'une combinaison de celles-ci.

2. Procédé selon la revendication 1, comprenant en outre :
la communication desdites caractéristiques déterminées auxdits dispositifs d'utilisateurs finaux (116) ;
la réception d'un retour en provenance d'au moins un desdits dispositifs d'utilisateurs finaux (116) ;
l'utilisation desdites caractéristiques déterminées et des informations de retour dudit au moins un dispositif d'utilisateurs finaux pour déterminer s'il faut gérer, transférer et/ou effectuer un transfert intercellulaire d'une transmission desdites données reçues par l'intermédiaire de ladite interface cellulaire à femtocell (212), de ladite interface WLAN (210), ou d'une combinaison de celles-ci.

3. Procédé selon la revendication 1, comprenant la réception (302) par ledit dispositif, desdites données par l'intermédiaire d'une connexion IP.

4. Procédé selon la revendication 1, comprenant la remise en paquets (306 ; 326) desdites données dans des paquets formatés conformément aux protocoles WLAN et/ou aux protocoles cellulaires.

5. Procédé selon la revendication 1, dans lequel lesdites données reçues comprennent un flux de données, dans lequel une partie dudit flux de données est transmise auxdits un ou plusieurs dispositifs d'utilisateurs finaux par l'intermédiaire de ladite interface WLAN (210), et une partie restante dudit flux de données est transmise auxdits un ou plusieurs dispositifs d'utilisateurs finaux par l'intermédiaire de ladite interface cellulaire (212).

6. Procédé selon la revendication 1, comprenant :
la réception (322) de données en provenance d'un ou plusieurs dispositifs d'utilisateurs finaux par l'intermédiaire de ladite interface WLAN intégré (210) et/ou de ladite interface cellulaire à femtocell intégré (212) ;
le traitement (326) desdites données reçues pour les reformater et/ou remettre en paquets dans un ou plusieurs paquets IP correspondants ; et
la transmission (328) desdits un ou plusieurs paquets IP vers un ou plusieurs dispositifs de destination par l'intermédiaire d'une connexion de réseau unique.

7. Procédé selon la revendication 6, comprenant la transmission, par ledit dispositif, desdites données par l'intermédiaire d'une connexion IP.

8. Procédé selon la revendication 6, dans lequel ladite interface cellulaire à femtocell (212) et/ou ladite interface WLAN (210) est/sont configurée(s) sur la base des paramètres échangés avec lesdits un ou plusieurs dispositifs d'utilisateurs finaux.

9. Procédé selon la revendication 6, comprenant la détermination s'il faut recevoir lesdites données en provenance d'un dispositif particulier desdits dispositifs d'utilisateurs finaux à l'aide de ladite interface WLAN (210) et/ou à l'aide de ladite interface cellulaire à femtocell (212) sur la base des paramètres échangés avec ledit dispositif particulier desdits dispositifs d'utilisateurs finaux.

10. Procédé selon la revendication 6, dans lequel une partie d'un flux de données est reçue par l'intermédiaire de ladite interface WLAN (210) et une partie restante dudit flux de données est reçue par l'intermédiaire de ladite interface cellulaire à femtocell (212).

11. Système de réseautage, le système comprenant :
un ou plusieurs circuits comprenant une interface WLAN (210) et une interface cellulaire à femtocell (212) intégrée sur un substrat commun et/ou dans un boîtier commun, dans lequel lesdits un ou plusieurs circuits fonctionnent de manière à :
recevoir des données ;
déterminer une destination desdites données reçues ; et
transmettre lesdites données reçues à un ou plusieurs dispositifs d'utilisateurs finaux par l'intermédiaire de ladite interface WLAN (210) et/ou de ladite interface cellulaire à femtocell (212) sur la base de ladite destination déterminée ;
dans lequel lesdits un ou plusieurs circuits fonctionnent en outre de manière à :
déterminer des caractéristiques comprenant au moins un élément de ce qui suit :
des taux d'erreur binaire desdites données reçues ;
des niveaux d'interférence et une intensité de signal des signaux reçus par l'intermédiaire de ladite interface cellulaire à femtocell (212) et de ladite interface WLAN (210) ; et
une bande passante disponible de connexions établies avec des dispositifs d'utilisateurs finaux (116) ; et
utiliser lesdites caractéristiques déterminées pour déterminer s'il faut gérer, transférer et/ou effectuer un transfert intercellulaire d'une transmission desdites données reçues par l'intermédiaire de ladite interface cellulaire à femtocell (212), de ladite interface WLAN (210), ou d'une combinaison de celles-ci.

12. Système selon la revendication 11, dans lequel lesdits un ou plusieurs circuits fonctionnent en outre de manière à :
communiquer lesdites caractéristiques déterminées auxdits dispositifs d'utilisateurs finaux (116) ;
recevoir un retour en provenance d'au moins un desdits dispositifs d'utilisateurs finaux (116) ;
utiliser lesdites caractéristiques déterminées et les informations de retour dudit au moins un dispositif d'utilisateurs finaux pour déterminer s'il faut gérer, transférer et/ou effectuer un transfert intercellulaire d'une transmission desdites données reçues par l'intermédiaire de ladite interface cellulaire à femtocell (212), de ladite interface WLAN (210), ou d'une combinaison de celles-ci.

13. Système selon la revendication 11, dans lequel lesdits un ou plusieurs circuits fonctionnent de manière à recevoir lesdites données par l'intermédiaire d'une connexion IP.

14. Système selon la revendication 11, dans lequel lesdits un ou plusieurs circuits fonctionnent de manière à mettre en paquets lesdites données dans des paquets formatés conformément aux protocoles WLAN et/ou aux protocoles cellulaires.

15. Système selon la revendication 11, dans lequel lesdites données reçues comprennent un flux de données, dans lequel une partie dudit flux de données est transmise auxdits un ou plusieurs dispositifs d'utilisateurs finaux par l'intermédiaire de ladite interface WLAN (210), et une partie restante dudit flux de données est transmise auxdits un ou plusieurs dispositifs d'utilisateurs finaux par l'intermédiaire de ladite interface cellulaire à femtocell (212).
